# EUROPEAN PATENT SPECIFICATION

(11) **EP 1 013 163 B1**
(45) Date of publication and mention of the grant of the patent: **29.08.2007**
(21) Application number: 99310267.2
(22) Date of filing: 20.12.1999
(51) Int. Cl.: A01G 1/06

(54) **Method of growing roses**
Rosenzuchtverfahren
Méthode de culture de roses

(30) Priority: 18.12.1998 GB 9828089
(43) Date of publication of application: 28.06.2000
(73) Proprietor: May, David, Farnham, Surrey GU10 1LD (GB)
(72) Inventor: May, David, Farnham, Surrey GU10 1LD (GB)
(74) Representative: Schlich, George William

(56) References cited:
- FR-A- 2 482 414
- FR-A- 2 589 672
- GB-A- 1 125 088

## Description

The present invention relates to a method of growing roses and to roses obtained thereby. In particular, the invention relates to a method of propagating roses by budding to obtain a rose plant in a container such as a pot as opposed to traditional open ground methods.

Today, there are many species and several thousand varieties of roses, and these may be divided, for example, into species roses, old roses, hybrid teas, floribundas, shrub roses, ground cover, climbers, ramblers and miniatures. Roses may be propagated by seeds, cuttings, grafting or budding but the former two propagation methods have known disadvantages. Only the species roses come true from seeds. Some roses can be cultivated from cuttings, but the resultant plants even then often lack vigour in the early years.

It is known to propagate roses by budding and this process has become the standard means of propagating most roses. Most gardening publications will include a brief section describing how to propagate roses by budding, and one example is found in Readers' Digest "New Illustrated Guide To Gardening", published by The Readers' Digest Association Limited, 1979, on pages 231-232. Essentially, a root stock is planted in the field in March or April and is budded in July of that year. A T-shaped cut is made about 2.5cm long in the bark of the stock close to the roots. Into this cut is placed a bud, sometimes referred to as a "shield", and the bud is tied in place using materials such as raffia, a rubber tie or plastic tape. This process is usually carried out by highly skilled labour.

The budded stock or briar is usually left until January of the following year when the branches of the briar are removed to allow the rising sap to feed the inserted bud and promote it into growth. During the Summer, the plants are regularly fed and sprayed against diseases and pests. The new shoot from the bud is topped periodically to encourage side shoots to grow to produce a well shaped product. The plant material from topping can be used to bud onto a stock to maintain the cycle of propagation.

In about October or November, the plant is lifted from the field, all the soft growth on the tops is removed and the roots are severely pruned to allow for containerising in rose pots, or root wrapping at a convenient size, or for bare root sales. Most containerised plants are then made available for sale that same Autumn and/or the following Spring or Summer.

A particular disadvantage of this traditional method is that from grafting of the bud onto the root stock until the point at which a saleable plant is produced in a pot in a garden centre takes a long time, and typically about eighteen months to two years. Consequently, a lot of nursery space is tied up for growing of plants which are at the one year stage and can not yet be sold.

A further problem is that not all buds will be taken up successfully by the root stock and there is consequently a percentage of buds that will fail. Using the existing method, once it is apparent that a budding has failed it is generally not cost effective for a second bud to be grafted onto that particular root stock.

It is an object of the present invention to provide a method of growing roses that overcomes or at least ameliorates one or more of the aforementioned disadvantages. It is an object of embodiments of the present invention to enable propagation of roses in a shorter time than using existing methods. It is a further object of embodiments of the invention to provide a method of propagating roses in which an early determination can be made that a bud has not be taken up by a root stock so that the root stock may be re-budded in that same season.

Rumsey, R. Comb. Proc. Int. Plant Propag. Soc. 1973, 23: 411-414 describes propagation of container-grown roses in New Zealand using cuttings of Rosa multiflora.

GB-A-1125088 also describes rose propagation via root stock cuttings.

Accordingly, the present invention provides a method of propagating a rose plant, comprising grafting a rose bud onto a root stock to obtain a container-grown rose plant, characterised in that the method comprises placing a field-grown root stock in a container containing 1 litre or less of potting compound and then grafting the bud onto the root stock, and in that roots of the rose plant are substantially not disturbed after grafting of the bud onto the root stock.

In the prior art method, whilst transferring a budded root stock from open field to a container, the roots are usually cut initially by spade, or mechanically by a tractor lifting the stocks, and then the roots are further severely pruned in placing the stock in a container accompanied by potting compound such as compost. This cutting significantly hinders growth of the rose plant until the root system has regrown into the container. It is an advantage of the method of the invention that the roots of the plant are not cut in this way after budding, and hence the rose plant can flourish immediately without a check in growth, e.g. while waiting for roots to become re-established.

It is preferred that the rose plant is container-grown from grafting the rose bud onwards, and thus spends no time after budding in the field. It is further preferred that the bud is grafted onto a containerised and established root stock. Rose plants in their containers may be stored outside, advantageously taking up less nursery space whilst growing on. They will not need to be transferred from open field to containers after budding.

Prior to the step of grafting the bud onto the root stock, it is preferred that the root stock is allowed to establish roots in the container. Typically, a briar is placed in a pot with soil and/or compost and/or other suitable potting media and watered for a period of weeks or months so roots can grow and fill or start to fill the pot, so as to provide a root stock in a container that is ready to receive a bud and in a suitable condition for the inserted bud to take.

In a specific embodiment of the invention, set out in more detail below, root stocks are potted at least one month prior to budding so that roots develop before budding. Generally, the stocks are potted at least two or three months prior to budding.

Following budding of a new bud onto a stock, it is preferred to keep the new rose plant outside, not under glass and not in a polythene tunnel, until the bud has taken, i.e. until it can be determined that the budding has been successful. An advantage is that special enclosures for the new plants are not needed. Also, there can be a risk of adversely affecting uptake of buds if new plants are kept indoors for the period immediately post-budding and during which buds are taking to the stocks. Keeping the new plants indoors, under glass, in tunnels or otherwise enclosed can severely reduce budding success and is preferably avoided.

In a specific embodiment of the invention, described below in further detail, a failure rate at budding of just 8% has been obtained, which constitutes a significant improvement over conventional methods in which a failure rate of 15% is typical.

It is also preferred that, prior to budding, the root stock is potted so as not to allow it to become too soft and/or sappy. At budding, the stock is preferably slightly ripe, and so is usually more pliable than a stock in the field, but should not be excessively sappy as this tends to reduce the success rate of budding. Potting stocks into containers of small to medium volume is suitable, and in the invention good results are obtained with containers having volumes of 1 litre or less. A specific embodiment used a 0.4 litre pot and gave a very high overall rate of budding, including rebudding when initial budding had failed, of about 97%.

The plants may be moved from one pot to another as growth continues and indeed this is conventional in propagation of most plants. However, there is preferably substantially no disturbance of roots during these transfers, so growth of the plants is not checked after budding.

By disturbance we refer to cutting of roots by spade or mechanical cutter, and we refer also to pruning of roots using hand-held pruning knives or cutters. When budded briars (rose plants) are lifted from the field approximately 40% of the visible root system is routinely removed to enable potting into a container. This much is removed quite apart from the root left in the ground, and the total proportion of root removal represents significant disturbance requiring replacement before noticeable growth of shoots can continue. The major root damage caused by lifting and root pruning for containerisation may be regarded as usually being growth halting in the short term. It is this disturbance or major cutting that is avoided in the present invention.

In the method of the invention, a root stock may be placed in potting compound such as compost in a container and the rose bud grafted onto the root stock whilst the root stock is in the container. A further advantage of the invention is that with the rootstock in the container at time of grafting, the stem is typically more pliable than the stem of field grown stocks. The grafting can be carried out slightly earlier in the season and more easily, e.g. at bench height.

The briar root stock may be heeled in peat over winter prior to being placed in a container to allow for root development and to get the sap rising prior to grafting of the bud onto the root stock.

All briar stocks are believed to be suitable for use in the present invention. More specifically, the root stock is suitably selected from *Rosa laxa, Rosa simplex, Rosa canina* and *Rosa rugosa* or similar. In specific embodiments of the invention, we have grafted rose buds into *Rosa laxa.*

All rose varieties suitable for budding are believed to be suitable for the method of the invention and to date the varieties that have actually successfully been propagated according to the invention, referring to names commercially recognised in the UK, i.e. not the registered names, are:-
the climbers Alberic Barbier, Albertine, Alister Stella Gray, Allgold, Aloha, Altissimo, American Pillar, Bantry Bay, Best Wishes, Blush Noisette, Boy James, Breath of Life, Cecil Brunner, Compassion, Constance Spry, Dance de Feu, Dorothy Perkins, Dublin Bay, Emily Gray, Etoile de Hollande, Excelsa, Felicity Perpetue, Francis E. Lester, Gloire de Dijon, Golden Showers, Handel, Iceberg, Kiftsgate, Leverkusen, Madame Butterfly, Madame Alfred Carriere, Maigold, Mermaid, New Dawn, Paul's Himalayan Musk, Pauls Scarlet, Penny Lane, Phyllis Bide, Pink Perpetue, Rambling Rector, Rosa banksiae lutea, Royal Gold, Schoolgirl, Sir Cedric Morris, Veilchenblau, Warm Welcome, Wedding Day, Zepherine Drouhin;
the patio roses Bright Smile, Chadworth, Conservation, Fairy Queen, Festival, Greenalls Glory, Little Woman, Little White Pet, Orange Sunblaze, Piccolo, Queen Mother, Regensborg, Seale Peach, Sweet Dreams, Sweet Memories, The Fairy, Wee Jock, Yellow Patio, Yvonne Rabier;
the shrubs Abraham Derby, Agnes, Alfred de Dalmas, Ballerina, Baroness Rothschild, Blush Damask, Bourbon Queen, Buff Beauty, Camaieux, Canary Bird, Captain John Ingram, Cecil Brunner, Complicata, Comte de Chambord, Comtesse du Cayla, Cornelia, Duc de Guiche, Duchess of Portland, Empress Josephine, English Garden, Felicia, Ferdinand Pichard, Francis E. Lester, General Kleber, Gertrude Jekyll, Goldbusch, Golden Wings, Graham Thomas, Gypsy Boy, Heritage, Ispahan, Jacques Cartier, John Cabot, Joseph's Coat, L.D. Braithwaite, Louise Odier, Madame Hardy, Maiden's Blush, Mary Rose, Meg Merrilies, Mutabilis, Nevada, Old Blush, Penelope, Quatre Saisons, Rosa Mundi, Rosa moyesi Geranium, Rubrifolia, Schneezwerg, Stanwell Perpetual, White Provence, William Shakespeare , Winchester Cathedral;
the ground cover roses Gwent, Magic Carpet, Oxfordshire, Surrey, Sussex;
the hybrid teas Alec's Red, Alexander, Anna Pavlova, Blessings, Chanelle, Congratulations, Dainty Bess, Deep Secret, Dutch Gold, E.H. Morse, Ena Harkness, Especially for You, Fragrant Cloud, Freedom, Just Joey, Lover's Meeting, Loving Memory, Madame Butterfly, Pascali, Peace, Piccadily, Prima Ballerina, Remember Me, Renaissance, Royal William, Ruby Wedding, Silver Jubilee, Silver anniversary, Super Star, The Doctor, Thomas Barton, Trumpeter, Warm Wishes; and
the floribundas All Gold, Anne Harkness, Arthur Bell, Beautiful Britain, Bonica, Chinatown, Fascination, Fellowship, Frensham, Golden Wedding, Hannah Gordon, Iceberg, Margaret Merrill, Masquerade, Mountbatten, Orange and Lemon, Patio Roses, Pink Parfait, Queen Elizabeth, Remembrance, Sexy Rexy, Southampton, Sunset Boulevarde, The Times, The Painter, William Cobbett, Woburn Abbey.

In a specific embodiment of the invention in use, the method comprises:-
a. heeling in a root stock in peat;
b. removing the root stock from the peat, trimming the roots of the root stock and transferring the root stock to a container containing potting compound such as compost, upper shoots of the root stock optionally being trimmed;
c. grafting a rose bud onto the root stock to form a rose plant;
d. growing the rose plant to obtain shoots derived from the grafted rose bud;
e. optionally, removing shoots derived from the root stock about 4 weeks after budding, or removing the briar shoots in the Autumn, Winter or Spring following budding; and
f. optionally, transferring the rose plant to a further container or containers;
to obtain a container-grown rose plant the roots of which have substantially not been disturbed since grafting of the rose bud onto the root stock. In step (e) it is preferred to remove the shoots in early Winter, though the timing of this depends also upon the weather and the amount of growth to date of the bud.

It is a further advantage that the grafting step can be carried out early in the season and can readily be inspected for success of taking. The method may further include a step wherein after grafting of the rose bud onto the root stock, the rose bud is inspected and if the bud has not taken the grafting step is repeated using a new rose bud. This can increase the percentage success rate in any one season.

The invention is not restricted to any particular type of rose bud but can be used for propagation by budding of all roses susceptible to be budded. Roses that may be propagated by the invention include ramblers, climbers, floribundas, hybrid teas, ground cover roses, miniatures, shrub roses and patio roses.

The invention further provides a method of obtaining a rose plant in a container for sale to or at a garden centre or other retail outlet, comprising placing a root stock in a container, budding onto the root stock a rose bud to form a rose plant and growing the plant in a container or in containers until ready for sale.

The invention still further provides a method of obtaining a rose plant in a container for sale to or at a garden centre or other retail outlet, comprising grafting a rose bud onto a root stock to form a rose plant and thereafter growing the plant continuously in a container or in containers. Preferably, before grafting of the bud onto the rootstock the roots of the root stock are cut and/or pruned whilst preparing the root stock to be placed in the container but after grafting of the bud into the rootstock the roots of the root stock are substantially not disturbed.

There now follows a description of specific embodiments of the present invention, illustrated by the accompanying drawings in which:-
Fig. 1 shows a rose propagated using the prior art method;
Figs. 2 and 3 show roses propagated using the method of the present invention;
Fig. 4 shows a conventionally budded "Excelsa" rose;
Figs. 5 and 6 show "Excelsa" rose budded according to the invention;
Fig. 7 shows the root system of a conventionally budded "Compassion" rose;
Fig. 8 shows the root system of a "Compassion" rose budded according to the invention; and
Fig. 9 shows roses budded according to the invention in liner trays.

### Comparative Example 1

In March of year 1, a briar of *Rosa laxa* was planted in the field and watered at regular intervals. In July of that year, a bud from a climbing rose "American Pillar" was inserted into a T-shaped cut in the stem of the briar about 4-5cm above soil level. This was wrapped round the stem with a rubber tie.

The budded briar was left until January of year 2 at which point the branches of the briar that had grown were removed. During the Summer of year 2 the plant was regularly fed and sprayed against diseases and pests and the new shoots from the bud trimmed. This encouraged a number of side shoots to grow from the grafted bud, producing a well shaped product.

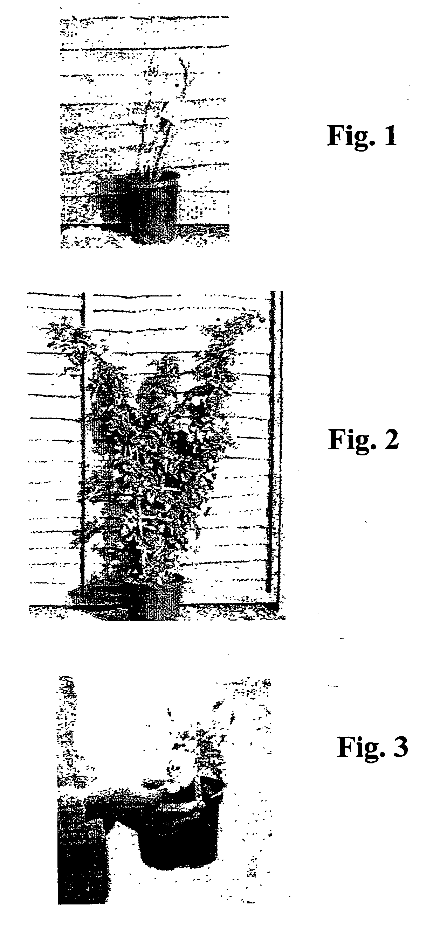

In October of year 2 the plant was lifted from the field, all the top growth was removed and the shoots cut back to about 60cm. The roots were severely pruned to enable the plant to be potted in a three litre rose pot. The resultant plant is illustrated in Fig. 1, and this represents a rose obtained using the prior art conventional method, to be ready for sale about 16 months after budding, or with some flower about 2 years after budding.

### Example 1

In April of year 1, briar root stocks were removed from the boxes where they had been heeled in peat, their roots were trimmed and potted up into small round pots of about 0.4 litre volume in a peat - based compost. As much of the stem as possible was left above the level of the compost to allow for manoeuvrability when budding. These pots were placed in a conventional carrying tray, thereby taking up a lot less room than an equivalent number of plants in the open ground.

The briars were found quickly to fill the small pots with root growth and put on a considerably amount of top growth. It was observed that as the stems grew they were significantly more pliable and less woody then those of the counterparts grown in the open ground according to the prior art method. This pliability facilitated budding.

In June of year 1, buds of a climber "American Pillar" were placed into T-shaped cuts in the stem about 4-4.5cm above the pot level and tied using a rubber tie in the conventional way. The budded briars were then left in the small pot for a further 2-3 weeks, at the end of which it was a simple task to inspect the briars visually to determine whether the buds had taken. In a small number of cases, the bud had not taken and the briar was then rebudded immediately, increasing the percentage take-up compared to budding carried out in the open ground.

At the time of inspection in year 1, the successfully budded briars were potted into two litre shrub-type pots and divided into groups A and B. Rebudded briars were left for a further 2-3 weeks.

For plants in group A, the briar tops were cut off, this step being carried out approximately six months earlier than when the process is carried out in the open ground, and several flowering shoots were typically then grown on each plant producing a small but saleable plant by around September of year 1.

For plants in group B, the briar tops were left on for longer and not removed until January of year 2. The plants were fed and watered in their pots and produced shoots and flowers so that by June of year 2, approximately 12 months after budding, sizeable plants had been obtained which were ready for sale. One such plant is illustrated in Fig. 2.

Thus, 12 months after budding, the plants propagated according to the invention had the qualities and were of the size of a three year old field-grown plant. Plants propagated according to the invention had not suffered any checks in their growth as is the case in the prior art and nursery space was very efficiently used according to the process of the invention compared with the space required for propagation of roses according to the prior art methods.

### Example 2

The method of Example 1 was repeated to graft a bud of a ground cover rose "Oxfordshire" onto *Rosa laxa* stock. A plant 3 months after budding is shown in fig. 3.

### Example 3

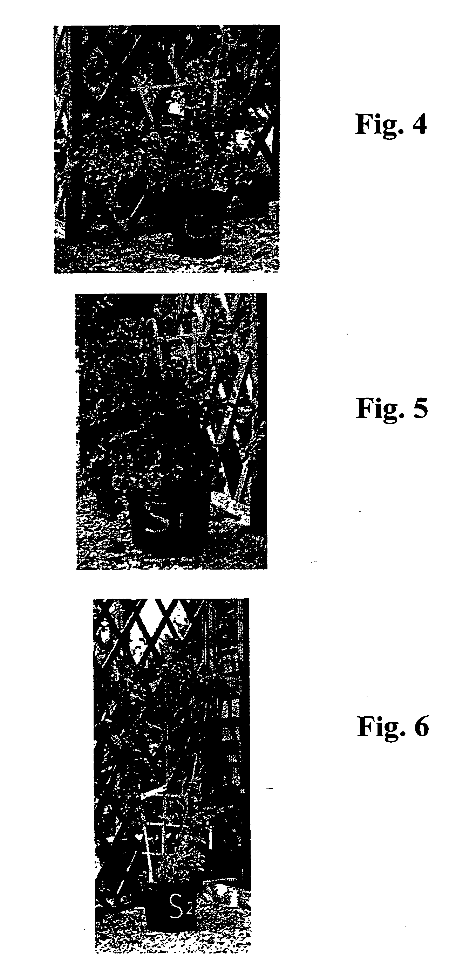

A climbing variety "Excelsa" was budded in the open ground using conventional methods in June 1997 and containerised in November 1998, and is shown in Figure 4. The same variety was budded in June 1997 and also June 1998 by the method of Example 1, and the plants obtained are shown respectively in Figures 5 and 6 - all photographs were taken in June 1999.

Comparison of these plants reveals that the conventionally - obtained plant of Figure 4 is at a similar stage of development to the Figure 6 plant of the invention that is 1 year younger. The Figure 5 plant of the invention shows considerably enhanced growth, some six feet (two meters) or so, compared to the same age of plant obtained conventionally of Figure 4.

### Example 4

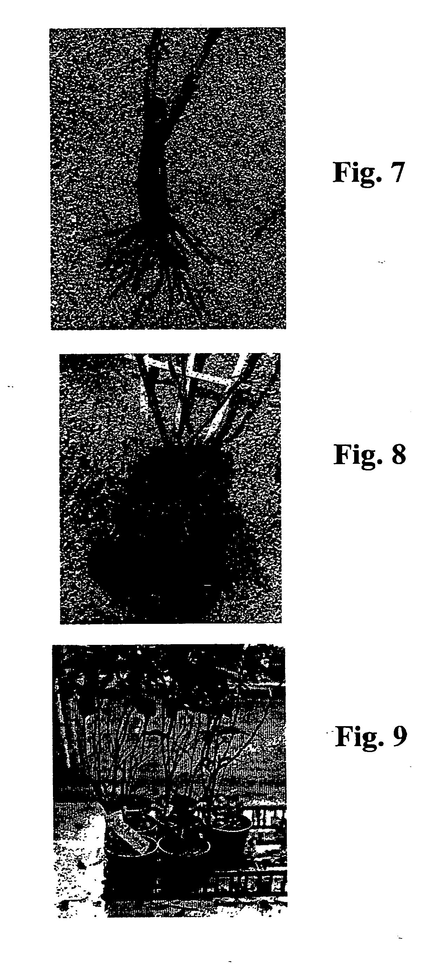

A climbing rose "Compassion" was budded in June 1998 according to both the conventional method and the method of the invention. In November 1999 the conventionally budded plant was lifted from the field and root pruned ready for containerisation, shown in Figure 7. There is notable absence of fibrous root. The plant of the invention was removed from its pot also in November 1999 for comparison of the respective root systems and is shown in Figure 8. A tight, established, fibrous root system is evident.

### Example 5

To illustrate the space saving potential of the invention, a group of briars were budded as described and their pots placed in known liner trays, shown in Figure 9. The trays allow for ease of handling and an approximate 7-fold saving of space was achieved compared with budded briars in the field. Once potted on into 2 litres pots a space saving of about 4-fold is achieved compared with field-grown equivalents.

Thus, the invention provides a method of growing roses, in particular a method of propagating roses by budding to obtain pot-grown rose plants.

## Claims

1. A method of propagating a rose plant, comprising grafting a rose bud onto a root stock to obtain a container-grown rose plant, **characterised in that** the method comprises placing a field-grown root stock in a container containing 1 litre or less of potting compound and then grafting the bud onto the root stock, **in that** the roots of the field grown root stock are trimmed before placing the root stock into the container and **in that** roots of the rose plant are not cut or prined after grafting of the bud onto the root stock, so as to obtain a rose plant in a container ready for sade within 12 months after grafting the bvd onto the rootstock.

2. A method according to Claim 1 wherein the stock is container-grown for at least one month prior to budding.

3. A method according to Claim 1 or 2 wherein prior to budding the stock is grown in 0.4 litres or less in volume of potting compound.

4. A method according to any of Claims 1 to 3, wherein after budding the rose plant is kept outside, not enclosed and not in a plastic tunnel, until the bud has taken.

5. A method according to any of Claims 1 to 4 wherein after grafting of the bud onto the root stock the rose plant may be moved from one container to another container, typically to a larger container, but substantially without cutting or pruning roots of the plant.

6. A method according to any of Claims 1 to 5 wherein the root stock is heeled in peat over Winter or a part thereof prior to being placed in a container in turn prior to grafting of the bud onto the root stock.

7. A method according to any of Claims 1 to 6, comprising:-
a. heeling in a root stock in peat;
b. removing the root stock from the peat, trimming the roots of the root stock and transferring the root stock to a container containing potting compound such as compost, upper shoots of the root stock optionally being trimmed;
c. grafting a rose bud onto the root stock to form a rose plant;
d. growing the rose plant to obtain shoots derived from the grafted rose bud;
e. removing shoots derived from the root stock; and
f. optionally, transferring the rose plant as it grows to a further container or containers;
to obtain a container-grown rose plant the roots of which have not been cut or pruned been disturbed since grafting of the rose bud onto the root stock;

8. A method according to any preceding claim wherein after grafting of the rose bud onto the root stock, the rose bud is inspected and if the bud has not taken the grafting step is repeated using a new rose bud.

9. A method according to any preceding claim wherein the root stock is selected from *Rosa laxa, Rosa simplex, Rosa canina* and *Rosa rugosa,* or similar.

10. A method according to any preceding claim wherein the rose bud is from a rose selected from a rambler, a climber, a floribunda, a hybrid tea, a ground cover, a miniature, a shrub or a patio rose.

11. A method according to any preceding Claim for propagating climbers.

12. A method according to any of Claims 1-10 to propagating floribundas.

13. A method according to any of Claims 1-10 for propagating hybrid teas.

14. A method according to any of Claims 1-10 for propagating ground cover roses.

15. A method according to any of Claims 1-10 for propagating miniatures.

16. A method according to any of Claims 1-10 to propagating shrub roses.

17. A method according to any of Claims 1-10 for propagating patio roses.

18. A method according to any of Claims 1-10 for propagating ramblers.

19. A method according to any preceding claim wherein the rootstock is *Rosa Laxa.*

## Patentansprüche

1. Verfahren zur Vermehrung einer Rosenpflanze, umfassend das Pfropfen einer Rosenknospe auf einen Wurzelstock, um eine Container-Rosenpflanze zu erhalten, **dadurch gekennzeichnet, dass** das Verfahren das Plazieren eines Freiland-Wurzelstocks in einem Container enthaltend 1 Liter oder weniger an Topferde und dann das Pfropfen der Knospe auf den Wurzelstock umfasst, dass die Wurzeln des Freiland-Wurzelstocks vor der Plazierung des Wurzelstocks in den Container getrimmt werden und dass the Wurzeln der Rosenpflanze nach dem Pfropfen auf den Wurzelstock nicht abgeschnitten oder beschnitten werden, um **dadurch** eine Rosenpflanze in einem Container fertig für den Verkauf innerhalb von 12 Monaten nach dem Pfropfen der Knospe auf den Wurzelstock zu erhalten.

2. Verfahren nach Anspruch 1, wobei der Stock während wenigstens eines Monats vor dem Knospen im Container gezogen ist.

3. Verfahren nach Anspruch 1 oder 2, wobei der Stock vor dem Knospen in 0.4 Liter oder weniger Volumen an Topferde gezogen ist.

4. Verfahren nach einem der Ansprüche 1 bis 3, wobei die Rosenpflanze nach dem Knospen im Freien gehalten ist, nicht eingeschlossen und nicht in einem Plastiktunnel bis die Knospe angewachsen ist.

5. Verfahren nach einem der Ansprüche 1 bis 4, wobei die Rosenpflanze nach dem Pfropfen der Knospe auf den Wurzelstock von einem Container in einen anderen Container umgetopft werden kann, typisch in einen grösseren Container, jedoch im wesentlichen ohne Abschneiden oder Beschneiden von Wurzeln der Pflanze.

6. Verfahren nach einem der Ansprüche 1 bis 5, wobei der Wurzelstock über den Winter oder einen Teil davon in Torf eingschlagen wird, bevor er in einen Container plaziert wird und dies wiederum vor dem Pfropfen der Knospe auf den Wurzelstock.

7. Verfahren nach einem der Ansprüche 1 bis 6, umfassend:
a. Einschlagen eines Wurzelstocks in Torf;
b. Hausnehmen des Wurzelstocks aus dem Torf, Trimmen der Wurzeln des Wurzelstocks und Überführen des Wurzelstocks in einen Container enthaltend Topferde wie z.B. Kompost, wobei obere Triebe des Wurzelstocks gegebenenfalls getrimmt werden;
c. Pfropfen einer Rosenknospe auf den Wurzelstock zur Bildung einer Rosenpflanze;
d. Ziehen der Rosenpflanze, um von der gepfropften Rosenknospe abgeleitete Triebe zu erhalten;
e. Entfernen von Trieben des Wurzelstocks; und
f. gegebenenfalls Überführen der Rosenpflanze während ihres Wachstums in einen weiteren Container oder Container;
um eine Container-Rosenpflanze zu erhalten, deren Wurzeln nicht abgeschnitten oder beschnitten wurden seit dem Pfropfen der Rosenknospe auf den Wurzelstock;

8. Verfahren nach einem vorangehenden Anspruch, wobei nach dem Pfropfen der Rosenknospe auf den Wurzelstock die Rosenknospe inspiziert wird und wenn die Knospe nicht angewachsen ist, der Pfropfschritt unter Verwendung einer neuen Rosenknospe wiederholt wird.

9. Verfahren nach einem vorangehenden Anspruch, wobei der Wurzelstock ausgewählt ist aus Rosa laxa, Rosa simplex, Rosa canina und Rosa rugosa oder Ähnlichen.

10. Verfahren nach einem vorangehenden Anspruch, wobei die Rosenknospe von einer Rose stammt, die ausgewält ist aus eine Rambler-, einer Kletter-, einer Floribunda-, einer Teehybrid-, einer Bodendecker-, einer Miniatur-, einer Strauch- oder einer Patiorose.

11. Verfahren nach einem vorangehenden Anspruch zur Vermehrung von Kletterern.

12. Verfahren nach einem der Ansprüche 1 bis 10 zur Vermehrung von Floribundas.

13. Verfahren nach einem der Ansprüche 1 bis 10 zur Vermehrung von Teehybriden.

14. Verfahren nach einem der Ansprüche 1 bis 10 zur Vermehrung von Bodendeckerrosen.

15. Verfahren nach einem der Ansprüche 1 bis 10 zur Vermehrung von Miniaturen.

16. Verfahren nach einem der Ansprüche 1 bis 10 zur Vermehrung von Strauchrosen.

17. Verfahren nach einem der Ansprüche 1 bis 10 zur Vermehrung von Patiorosen.

18. Verfahren nach einem der Ansprüche 1 bis 10 zur Vermehrung von Ramblern.

19. Verfahren nach einem vorangehenden Anspruch, wobei der Wurzelstock Rosa Laxa ist.

## Revendications

1. Procédé de propagation d'un plant de rosier, comprenant le greffage d'un bouton de rose sur un porte-greffe pour obtenir un plant de rosier cultivé en pot, **caractérisé en ce que** le procédé comprend le placement d'un porte-greffe cultivé en champ dans un pot contenant 1 litre ou moins de composé de rempotage puis le greffage du bouton sur le porte-greffe, **en ce que** les racines du porte-greffe cultivé en champ sont taillées légèrement avant de placer le porte-greffe dans le pot et **en ce que** les racines du plant de rosier ne sont pas coupées ou taillées après le greffage du bouton sur le porte-greffe, de sorte à obtenir un plant de rosier dans un pot prêt à la vente en l'espace de 12 mois après le greffage du bouton sur le porte-greffe.

2. Procédé selon la revendication 1, dans lequel le porte-greffe est cultivé en pot pendant au moins un mois avant le bourgeonnement.

3. Procédé selon la revendication 1 ou 2, dans lequel avant le bourgeonnement le porte-greffe est cultivé dans 0,4 litre ou moins en volume de composé de rempotage.

4. Procédé selon l'une quelconque des revendications 1 à 3, dans lequel après le bourgeonnement le plant de rosier est maintenu à l'extérieur, non enfermé et non dans un tunnel plastique, jusqu'à ce que le bourgeon ait fleuri.

5. Procédé selon l'une quelconque des revendications 1 à 4, dans lequel après le greffage du bourgeon sur le porte-greffe le plant de rosier peut être déplacé d'un pot à un autre, typiquement un pot plus grand, mais sensiblement sans couper ou tailler les racines du plant.

6. Procédé selon l'une quelconque des revendications 1 à 5, dans lequel le porte-greffe est mis en jauge dans de la tourbe pendant une partie ou la totalité de l'hiver avant de le placer dans un pot à son tour avant de greffer le bouton sur le porte-greffe.

7. Procédé selon l'une quelconque des revendications 1 à 6, comprenant les étapes consistant à :
a. mettre en jauge un porte-greffe dans de la tourbe ;
b. enlever le porte-greffe de la tourbe, tailler légèrement les racines du porte-greffe et transférer le porte-greffe dans un pot contenant un composé de rempotage tel que du compost, les pousses aériennes du porte-greffe étant facultativement légèrement taillées ;
c. greffer un bouton de rose sur le porte-greffe pour former un plant de rosier ;
d. cultiver le plant de rosier pour obtenir des pousses dérivées du bouton de rose greffé ;
e. enlever les pousses dérivées du porte-greffe ; et
f. facultativement, transférer le plant de rosier lorsqu'il pousse dans un pot ou des pots supplémentaires ;
pour obtenir un plant de rosier cultivé en pot dont les racines n'ont pas été coupées ou taillées depuis le greffage du bouton de rose sur le porte-greffe.

8. Procédé selon l'une quelconque des revendications précédentes, dans lequel après le greffage du bouton de rose sur le porte-greffe, le bouton de rose est inspecté et si le bouton n'a pas fleuri l'étape de greffage est répétée en utilisant un nouveau bouton de rose.

9. Procédé selon l'une quelconque des revendications précédentes, dans lequel le porte-greffe est choisi parmi *Rosa laxa, Rosa simplex, Rosa canina* et *Rosa rugosa,* ou similaire.

10. Procédé selon l'une quelconque des revendications précédentes, dans lequel le bouton de rose provient d'une rose choisie parmi un rosier liane, un rosier grimpant, un rosier floribunda, un rosier hybride de thé, un rosier rampant, un rosier miniature, un rosier arbuste ou un rosier de patio.

11. Procédé selon l'une quelconque des revendications précédentes pour propager des rosiers grimpants.

12. Procédé selon l'une quelconque des revendications 1 à 10 pour propager des rosiers floribunda.

13. Procédé selon l'une quelconque des revendications 1 à 10 pour propager des rosiers hybrides de thé.

14. Procédé selon l'une quelconque des revendications 1 à 10 pour propager des rosiers rampants.

15. Procédé selon l'une quelconque des revendications 1 à 10 pour propager des rosiers miniatures.

16. Procédé selon l'une quelconque des revendications 1 à 10 pour propager des rosiers arbustes.

17. Procédé selon l'une quelconque des revendications 1 à 10 pour propager des rosiers de patio.

18. Procédé selon l'une quelconque des revendications 1 à 10 pour propager des rosiers lianes.

19. Procédé selon l'une quelconque des revendications précédentes, dans lequel le porte-greffe est *Rosa Laxa.*
